(19) Europäisches Patentamt
European Patent Office
Office européen des brevets

(11) **EP 1 439 010 B1**

(12) **FASCICULE DE BREVET EUROPEEN**

(45) Date de publication et mention
de la délivrance du brevet:
**14.11.2018 Bulletin 2018/46**

(51) Int Cl.:
***B06B 1/16*** *(2006.01)* ***G05D 19/02*** *(2006.01)*

(21) Numéro de dépôt: **03293214.7**

(22) Date de dépôt: **18.12.2003**

(54) **Générateur d'efforts dynamiques à balourd**

Dynamischer Unwuchterreger

Unbalanced dynamic vibration generator

(84) Etats contractants désignés:
**AT BE BG CH CY CZ DE DK EE ES FI FR GB GR
HU IE IT LI LU MC NL PT RO SE SI SK TR**

(30) Priorité: **17.01.2003 FR 0300512**

(43) Date de publication de la demande:
**21.07.2004 Bulletin 2004/30**

(73) Titulaire: **HUTCHINSON**
**75008 Paris (FR)**

(72) Inventeur: **Noe, Mathieu**
**77630 Barbizon (FR)**

(74) Mandataire: **Gevers & Orès**
**41 avenue de Friedland**
**75008 Paris (FR)**

(56) Documents cités:
**EP-A- 0 092 014      EP-A- 0 337 040
EP-A- 0 840 191      DE-A- 4 407 013**

**Description**

La présente invention concerne un générateur d'efforts dynamiques à balourd comprenant au moins une paire de masses tournantes excentrées et disposées symétriquement par rapport à un plan.

Un tel dispositif comprenant une paire de masses excentrées est connu du Brevet Français FR 2 169 672 (VIBRO-VERKEN) déposé le 25 Janvier 1973.

On connaît également des dispositifs utilisant deux paires de masses tournantes qui permettent de compenser une force vibratoire créée dans un corps. De tels dispositifs sont décrits en particulier dans la Demande de Brevet Européen EP 337 040 (ALSTHOM) dans laquelle les quatre masses sont indépendantes, et dans le Brevet US 5 903 077 (MOOG Inc.) dans lequel les masses sont mécaniquement couplées par paires. Pour réaliser l'asservissement de fréquence et de phase des masses tournantes, on utilise des capteurs continus (codeur angulaire ou synchro-résolveur) qui sont coûteux à mettre en oeuvre DE 44 07 013 et EP 0 840 191 concernent un générateur d'efforts dynamiques à balourd comprenant au moins une paire de masses tournantes excentrées et symétriques, un module commande, un capteur de position angulaire de référence et un circuit de calcul.

La présente invention a pour objet un générateur d'efforts dynamiques à balourd du type précité qui présente un coût réduit par rapport aux solutions connues.

L'idée de base de l'invention est que, de manière surprenante, on peut réaliser un pilotage efficace en ne relevant la position angulaire des masses tournantes excentrées qu'en un point (ou en quelques points) pour chaque tour.

Dès lors, on peut utiliser des capteurs ponctuels (capteur à effet Hall, capteur optique, etc...) dont le coût est bien moins élevé que celui des capteurs utilisés jusqu'à présent pour obtenir une mesure continue de la position angulaire des masses tournantes excentrées, considérée comme nécessaire pour l'application envisagée en raison des irrégularités causées par l'excentrement des masses.

L'invention concerne ainsi un générateur d'efforts dynamiques à balourd selon la revendication 1.

Le générateur peut être caractérisé en ce qu'il comporte un circuit de mesure de phase pour mesurer un écart temporel (ou erreur de phase) entre le signal délivré par le capteur de position et un point de référence du signal de consigne et en ce que le circuit de calcul comporte un module correcteur pour générer ledit signal de commande également en fonction de la différence entre ledit écart temporel mesuré et un écart temporel de consigne.

Selon une première variante, les masses d'au moins une paire sont couplées mécaniquement entre elles, et il n'y a qu'un seul capteur de position angulaire de référence qui est associé à une des deux masses de la paire.

Selon une deuxième variante, les masses d'au moins une paire sont mécaniquement indépendantes et le générateur présente un capteur de position angulaire de référence pour chacune des deux masses de ladite paire. Le générateur est caractérisé en ce qu'il présente un indicateur temporel dont la valeur est incrémentée par une horloge et une mémoire pour mémoriser la valeur de l'indicateur temporel lorsque le capteur de position angulaire de référence délivre ledit signal de position et lorsque le signal de consigne passe par un point caractéristique. Le circuit de calcul peut alors comporter un élément de calcul à partir des valeurs mémorisées de l'indicateur temporel, de la première période temporelle qui sépare deux signaux de position successifs, et de la deuxième période temporelle qui sépare le passage du signal de consigne par deux points caractéristiques successifs et, pour générer le signal de commande, il comporte un élément de calcul de la différence entre lesdites première et deuxième périodes temporelles.

Il est avantageux que ladite différence entre les première et deuxième périodes doit normée par rapport à la deuxième période qui correspond au signal de consigne. De la sorte la différence normée correspond à une variation relative de fréquence, ce qui facilite la régulation.

Le circuit de calcul peut également comporter un élément de calcul, qui reçoit les valeurs mémorisées de l'indicateur temporel, et qui génère l'écart temporel mesuré qui est déterminé par différence entre l'instant où le capteur de position délivre le signal de position et l'instant où le signal de consigne passe par ledit point caractéristique.

Il est également avantageux de normer l'écart temporel mesuré par rapport à la deuxième période temporelle.

L'indicateur temporel peut être un compteur qui est réinitialisé périodiquement, par exemple par remise à zéro à chaque fois qu'il atteint son compte maximal.

Le générateur peut être également caractérisé en ce qu'il comporte un élément logique pour ajouter à la valeur mémorisée de l'indicateur temporel une valeur égale à la réinitialisation du compte du compteur pour le premier signal de position après chaque dite réinitialisation du compteur et pour le premier passage par ledit point caractéristique du signal de consigne après chaque dite réinitialisation.

Selon un mode de réalisation particulièrement avantageux, le générateur est caractérisé en ce qu'il présente deux paires de masses tournantes, et en ce que le signal de consigne présente une amplitude représentant le module d'une force sinusoïdale à produire par l'action conjuguée de deux paires de masses tournantes en ajustant une phase $\varphi$, l'une des paires de masses tournantes présentant une avance de phase $\varphi$ et l'autre paire de masses tournantes un retard de phase $\varphi$, par rapport au signal de consigne, le circuit de calcul générant d'une part un premier signal de commande pour ajuster la fréquence de rotation des masses tournantes et d'autre part un deuxième signal de commande pour ajuster ladite phase $\varphi$.

D'autres caractéristiques et avantages de l'invention apparaîtront à la lecture de la description ci-après, en liaison avec les dessins dans lesquels :

- la figure 1 est une représentation schématique d'un système à quatre modules identiques dont chacun comporte une masse excentrée ;
- la figure 2 illustre la boucle d'asservissement d'un module ;
- la figure 3 est un synoptique de fonctionnement d'un système selon la figure 1 ;
- les figures 4a et 4b sont des organigrammes illustrant le calcul respectivement de la consigne de phase et de période.

Lorsqu'on cherche à générer un effort sur une structure S quelconque sans s'appuyer sur une autre structure, le principe de base consiste à s'appuyer sur une masse de réaction m2.

L'effort magnétique U crée entre la structure et la masse m2 engendre un effort Ft dans la structure reliée à U par la relation Ft = H.U où H est une fonction de transfert donnée par les caractéristiques du montage du générateur :

$$H(p) = m2p^2 /(m2p^2 + K2),$$

K2 désignant la raideur de liaison entre la masse m2 et la structure S, et $p = j\omega$.

D'une façon générale la masse m2 est constituée par la masse mobile d'un générateur électromagnétique (à reluctance variable) ou d'un générateur électrodynamique.

La masse m2 et la rigidité K2 définissent un système mécanique oscillant dont on peut exploiter l'amplification à la résonance dans la limite des débattements admissibles.

Cette technique est couramment utilisée avec des générateurs électrodynamiques (bobines plongeant dans un champ constant).

Néanmoins, cette technique est difficilement applicable avec des générateurs électrodynamiques lorsqu'on cherche des niveaux d'effort transmis Ft élevés (typiquement supérieurs à 1 kN) car elle conduirait à une masse et un encombrement prohibitifs des aimants permanents créateurs du champ magnétique.

Une solution connue est celle d'un générateur à balourd tel que décrit par exemple dans les documents précités FR 2 169 672, EP 337 040 et US 5 903 077.

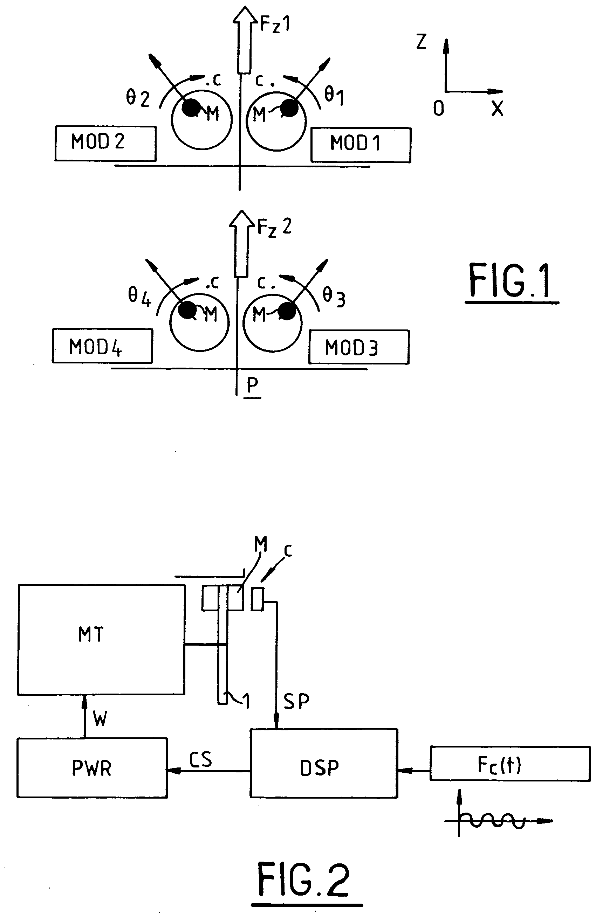

La figure 1 illustre un système à quatre modules identiques MOD1, MOD2, MOD3 et MOD4. Chacun des modules comporte une masse rotative M excentrée d'un rayon d'excentration R, les masses des modules d'une même paire MOD1 et MOD2 d'une part et MOD3 et MOD4 d'autre part étant contra-rotatives. On désigne respectivement θ1, θ2, θ3 et θ4 l'angle que fait avec l'axe vertical Oz la droite qui passe par l'axe de chacun des modules MOD1, MOD2, MOD3 et MOD4 et le centre de gravité de chacune des masses M.

On pose : θ1 = θ + φ
θ2 = π - θ1
θ3 = θ - φ
θ4 = π - θ3.

Les modules MOD1 et MOD2 génèrent une force sinusoïdale $F_{Z1}$ d'amplitude constante selon l'axe Oz.

Les modules MOD3 et MOD4 génèrent une force sinusoïdale $F_{Z2}$ d'amplitude constante selon l'axe Oz.

La résultante de ces deux forces est une force sinusoïdale Fz d'amplitude A réglable par le biais de l'angle φ avec :

$$Fz(t) = 4mR\omega^2\cos[\theta(t)] \cos \varphi \text{ avec } \omega = 2\pi f$$

f = fréquence de rotation des masses
$A = 4mR\omega^2 \cos\varphi$

Donc :

- $\cos\varphi$, donc φ pilote l'amplitude A (de la force Fz) ;
- θ(t) pilote la fréquence et la phase de la force Fz.

Le système est en général piloté par un signal sinusoïdal Fc(t) qui est proportionnel à A cos[θ(t)], et la force Fz est en phase avec ce signal de consigne.

Lorsque le signal de consigne atteint 100 % de sa pleine échelle (par exemple la pleine échelle d'un convertisseur analogique - numérique), la force de sortie Fz est égale à la force maximale Fmax atteignable à la fréquence f, soit :

Fmax = 4mR$\omega^2$ avec $\omega$ = 2$\pi$f.
On a alors cos$\varphi$ = 1, soit $\varphi$ = 0.
Pour $\varphi$ = $\pi$/2, la force Fz est nulle.

Pour $\varphi$ compris entre 0 et $\pi$/2, la force Fz est réglable entre 0 et Fmax.

Conformément à la figure 2, chaque module (qu'il y en ait deux ou quatre) comporte un moteur d'entraînement MT une roue 1, une masse excentrée 2, et un capteur C qui délivre un signal à chaque tour pour une position caractéristique de la masse M par exemple verticale ($\theta$ = 0).

Le signal du capteur C est délivré à une entrée d'un processeur de signal DSP et dont une autre entrée reçoit le signal de consigne Fc(t). Le processeur DSP est avantageusement commun à tous les modules. Alternativement, un processeur DSP différent est affecté à chaque module ou paire de modules.

Le processeur DSP produit en sortie un signal de commande CS par exemple en modulation par largeur d'impulsion qui commande un étage de puissance PWR qui pilote le moteur électrique MT.

Par rapport aux solutions décrites dans les documents des Brevets FR 2 169 672, EP 377 040 et US 5 903 077 on évite le coût généré par un asservissement de position par synchro-résolveur (US 5 903 077) ou par codeur angulaire (EP 377 040). La commande permettant de réaliser un asservissement indépendant de chaque module à coût compétitif, on peut éliminer également si on le désire l'inconvénient d'un entraînement mécanique entre les modules, par exemple un entraînement par engrenages comme dans le Brevet US 5 903 077 qui génère du bruit et qui présente un coût de fabrication et de maintenance plus élevé.

L'actionneur est dans ce cas constitué de deux ou quatre modules identiques et indépendants sur le plan mécanique.

Dans le cas d'une ou plusieurs paires de modules couplés mécaniquement entre eux quant à leur rotation, il suffit de prévoir un seul capteur pour une des masses excentrées de la paire et une seule boucle d'asservissement par paire de modules.

Par ailleurs, un module peut ne comporter qu'une roue 1, une masse M, un capteur C, un étage de puissance PWR et un moteur MT, le processeur DSP étant commun aux différents modules de l'actionneur.

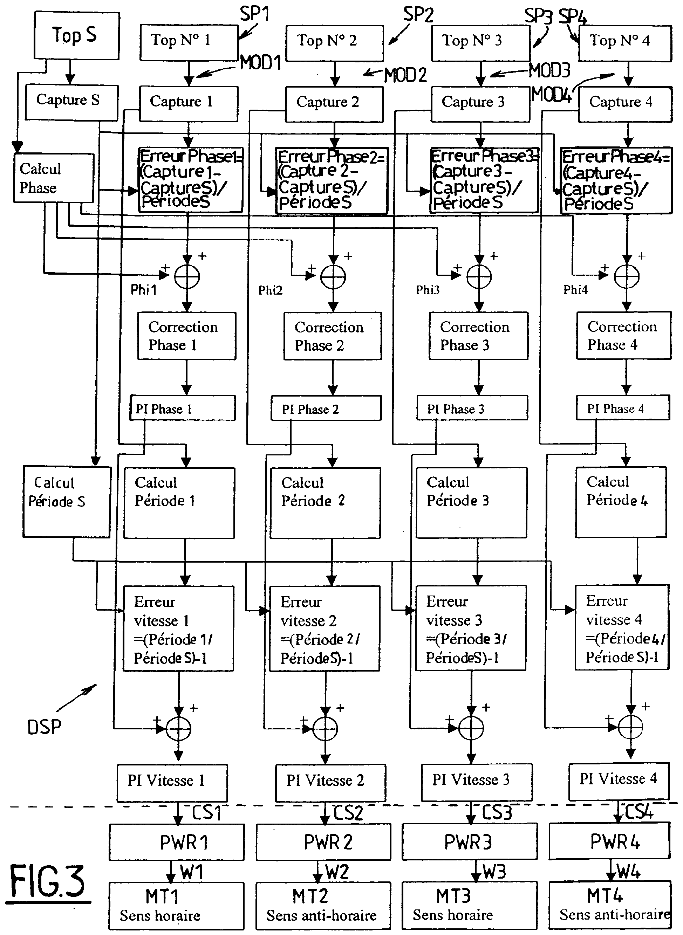

La figure 3 représente un synoptique de fonctionnement du processeur DSP.

On détecte toutes les périodes $\omega$, le passage du signal de consigne Fc(t) par un instant caractéristique, par exemple le passage par zéro du signal ascendant à l'aide d'un trigger de Schmitt. On obtient ainsi une impulsion qui correspond à un événement Top S pour le signal de consigne et une commande à $\theta$ = 0 pour les modules. A chaque passage d'une masse M devant un capteur C, celui-ci délivre une impulsion qui correspond à un événement Top 1 à Top 4 pour les modules MOD1 à MOD4. On choisit de préférence le passage de la masse M en position verticale ($\theta$ = 0), soit la même position que pour la position caractéristique du signal de consigne Fc(t).

Le système d'asservissement utilise un (ou plusieurs) compteur(s) pouvant être lu(s) par interruption du processeur DSP par les événements Top S, Top 1, Top 2, Top 3, Top 4 qui servent à capturer la valeur du compteur. Le compteur balaye les valeurs entières de 0 à 65535 à la fréquence Fs1. Lorsqu'il atteint sa valeur maximale Lcompteur (par exemple 65536), son contenu est remis à 0.

- Le compteur est incrémenté à une fréquence Fsl qui est un sous multiple de la fréquence du quartz du processeur : soit par exemple : Fs1 = 30 MHz/ 128 = 234,4 kHz.
- Top S est dédié au signal de consigne. Lorsque le signal d'entrée passe par 0 avec une pente positive, on déclenche une capture (lecture) du compteur (par exemple à l'aide d'un trigger de Schmitt). Cette valeur est stockée en tant que variable CaptureS. A la prochaine capture, on stocke la valeur de CaptureS dans CaptureSp (décalage d'indice), la valeur du compteur peut alors être stockée dans la variable CaptureS.

Top 1 est dédié au moteur 1 et à son capteur C. Lorsque le signal délivré par le capteur C passe de 0 à 1, on déclenche une capture (lecture) du compteur. Cette valeur est stockée en tant que variable Capture1. A la prochaine capture, on stocke la valeur de Capture1 dans Capture1p (décalage d'indice), la valeur du compteur peut alors être stockée dans la variable Capture1 (et ainsi de suite).

Top 2 est dédié au moteur 2 et à son capteur C. Lorsque le signal du capteur C passe de 0 à 1, on déclenche une capture (lecture) du compteur. Cette valeur est stockée en tant que variable Capture2. A la prochaine capture, on stocke la valeur de Capture2 dans Capture2p (décalage d'indice), la valeur du compteur peut alors être stockée dans la variable Capture2 (et ainsi de suite).

Top 3 est dédié au moteur 3 et à son capteur C. Lorsque le signal du capteur C passe de 0 à 1, on déclenche une capture (lecture) du compteur. Cette valeur est stockée en tant que variable Capture3. A la prochaine capture, on stocke la valeur de Capture3 dans Capture3p (décalage d'indice), la valeur du compteur peut alors être stockée dans la variable Capture3 (et ainsi de suite).

Top 4 est dédié au moteur 4 et à son capteur C. Lorsque le signal du capteur C passe de 0 à 1, on déclenche une capture du compteur. Cette valeur est stockée en tant que variable Capture4. A la prochaine capture, on stocke la valeur de Capture4 dans Capture4p (décalage d'indice), la valeur du compteur peut alors être stockée dans la variable Capture4 (et ainsi de suite).

A partir de ces variables réactualisées à chaque tour, on calcule à chaque tour une erreur de vitesse et une erreur de phase. On calcule tout d'abord les différentes périodes.

- Période S = Capture S - Capture Sp
- Période 1 = Capture 1 - Capture 1p
- Période 2 = Capture 2 - Capture 2p
- Période 3 = Capture 3 - Capture 3p
- Période 4 = Capture 4 - Capture 4p
- Erreur vitesse 1 = (Période 1/Période S) - 1
- Erreur vitesse 2 = (Période 2/Période S) - 1
- Erreur vitesse 3 = (Période 3/Période S) - 1
- Erreur vitesse 4 = (Période 4/Période S) - 1

Il s'agit de l'erreur de vitesse normalisée par la période Période S du signal de commande.
L'erreur non normalisée s'écrirait (Période 1 - Période S) pour le module 1 et ainsi de suite.
On calcule également les différentes erreurs de phase.

- Erreur Phase 1 = (Capture 1 -Capture S)/Période S
- Erreur Phase 2 = (Capture 2 -Capture S)/Période S
- Erreur Phase 3 = (Capture 3 -Capture S)/Période S
- Erreur Phase 4 = (Capture 4 -Capture S)/Période S.

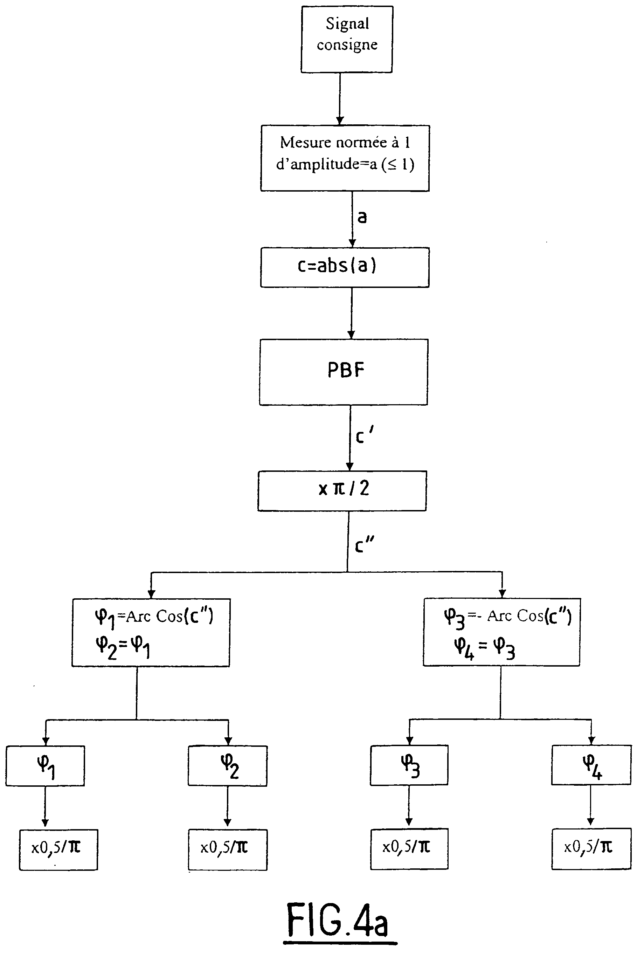

Les signaux Erreur vitesse 1 à 4 permettent de commander directement le moteur MT de chacun des modules (ou de paires de modules) pour ajuster la fréquence de rotation des masses à la valeur de consigne.
Pour chacun des modules, la valeur du signal Erreur de Phase référencé de 1 à 4 est comparé à une valeur de consigne de phase élaborée à partir de l'amplitude signal de consigne Fc(t).
En effet, ainsi qu'on l'a vu ci-dessus, l'amplitude du signal de consigne est proportionnelle à la force Fz à générer, et celle-ci dépend du déphasage φ.
Ce calcul est effectué comme indiqué à la figure 4a.
On norme le signal de consigne de sorte que son amplitude A maximale (par exemple 5V) corresponde à 1. L'amplitude normée a est ainsi comprise entre -1 et +1 crête à crête.
On prend ensuite c = abs (a) (c'est-à-dire la valeur absolue de a).
On applique à c un filtre passe-bas PBF. On obtient un signal c' et on calcule ensuite :

$$c' \times \Pi/2 = c''.$$

La consigne de phase φ1 et φ2 à appliquer aux modules 1 et 2 vaut alors
Arc cos c''
et la consigne de phase φ3 et φ4 à appliquer aux modules 3 et 4 vaut

- Arc cos c''.

Cette phase peut être normée en divisant sa valeur par $2\pi$
A partir des signaux de consigne de phase, d'erreur de vitesse et d'erreur de phase, on élabore de manière classique un signal de commande de vitesse et un signal de commande de phase avec correction proportionnelle et intégrale (PI vitesse 1 à 4, et PI phase 1 à 4). Ces signaux sont sommés pour former le signal $CS_1$.... $CS_4$ qui alimente les circuits PWR 1 à 4 qui délivrent les signaux W1 à W4 de commande des moteurs MT1 à MT4.
On a obtenu avec seulement un capteur C une précision de régulation de quelques % à une fréquence de 20 Hz. Au cas où on veut augmenter la précision, ou étendre le fonctionnement vers une plus basse fréquence, on peut effectuer plus d'une capture par tour. Dans ce cas, il est préféré de conserver le capteur de référence C qui donne un passage de la masse pour le point de référence choisi (ici θ = 0) et on adjoint à au moins un module un ou plusieurs capteurs auxiliaires de position angulaire ponctuelle décalés angulairement par rapport au capteur C. Le signal de ce ou ces capteurs auxiliaires qui alimente avantageusement une autre entrée du processeur DSP. En effet, la position de référence étant connue, on sait que la première impulsion reçue sur l'autre entrée du DSP après une impulsion fournie par le capteur de référence C correspond au premier capteur auxiliaire (s'il y en a plusieurs) et ainsi de suite, et il n'est donc pas besoin d'affecter une entrée particulière à chacun des capteurs auxiliaires.

Par exemple, pour trois capteurs auxiliaires répartis à 90°, on obtient à chaque tour un top délivré par le capteur principal C et trois tops successifs délivrés par les capteurs auxiliaires.

On rafraîchit alors les valeurs mémorisées tous les 90° d'où par exemple :

$$\text{Période 1} = 4 \, (\text{Capture 1} - \text{Capture 1p})$$

et ainsi de suite pour les autres modules.

En d'autres termes, on calcule la différence entre les valeurs mémorisées de la première et la deuxième période temporelle en ramenant ces périodes à un même écart angulaire pour les masses M en rotation.

Pour les signaux d'écart temporel Erreur Phase 1 à 4, il faut appliquer une correction de 0°, 90°, 180° et 270° selon que le top est délivré par le capteur principal C ou l'un des capteurs auxiliaires, pour tenir compte de leur décalage angulaire par rapport au capteur de référence C.

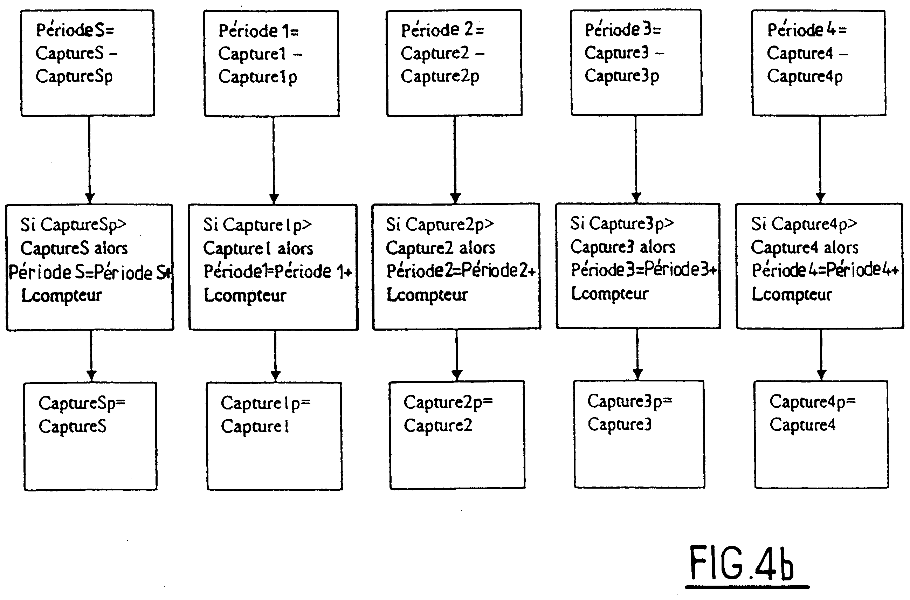

Dans le mode de réalisation envisagé, on a utilisé un compteur remis à zéro périodiquement. Si cette remise à zéro (ou plus généralement réinitialisation à un compte donné) a lieu entre deux captures, il faut en tenir compte en ajoutant à la valeur de la première capture Capture S et Capture 1 après réinitialisation le compte L compteur correspondant à la réinitialisation (voir figure 4b).

Le test d'une remise à zéro peut être

$$\text{Capture S} < \text{Capture Sp}$$

pour le signal de consigne et

$$\text{Capture 1} < \text{Capture 1p}$$

et ainsi de suite pour les signaux des capteurs.

Dans ce cas, on rajoute à Capture S et à Capture 1 à 4 le compte maximal du compteur pour que la différence calculée (Capture S < Capture Sp) et (Capture 1 < Capture 1p), etc... soit juste.

Pour démarrer le générateur, il est avantageux de lui appliquer une consigne de fréquence à une fréquence inférieure à la fréquence de fonctionnement désirée, par exemple 5 Hz pour un fonctionnement à 20 Hz. Une fois la fréquence stabilisée à la valeur basse (5 Hz), on augmente celle-ci pour obtenir la fréquence de fonctionnement, et on applique ensuite la consigne de phase.

Si à un instant donné l'écart de phase dépasse π (180°), ce qui correspond à une correction de phase supérieure à 0,5, alors, on choisit par exemple de retarder le moteur correspondant (plutôt que de l'avancer).

**Revendications**

**1.** Générateur d'efforts dynamiques à balourd comprenant au moins une paire de masses tournantes excentrées et symétriques par rapport à un plan et dont le mouvement est commandé par au moins un signal de commande (CS) généré par un module de commande en fonction d'un signal de consigne Fc(t) ayant une fréquence donnée, **caractérisé en ce que**, pour au moins une des masses (M), il comporte un capteur (C) de position angulaire de référence délivrant un signal de position (SP) représentant le passage de ladite masse tournante (M) par une position angulaire de référence et un circuit de commande comportant un circuit de calcul (DSP) pour calculer la périodicité de la rotation de ladite masse à partir des signaux de position (SP) successifs délivrés par le capteur de position (C) et pour générer ledit signal de commande (CS) en fonction de la différence entre la périodicité mesurée et la périodicité du signal de consigne Fc(t), et **caractérisé en ce qu'**il présente un indicateur temporel dont la valeur est incrémentée par une horloge et une mémoire pour mémoriser la valeur de l'indicateur temporel lorsque le capteur de position angulaire de référence délivre ledit signal de position (SP) et lorsque le signal de consigne Fc(t) passe par un point caractéristique.

**2.** Générateur selon la revendication 1, **caractérisé en ce qu'**il comporte un circuit de mesure de phase pour mesurer un écart temporel entre le signal délivré par le capteur de position (C) et un point de référence du signal de consigne Fc(t) et **en ce que** ledit circuit de calcul (DSP) comporte un module correcteur pour générer ledit signal de commande également en fonction de la différence entre ledit écart temporel mesuré et un écart temporel de consigne.

**3.** Générateur selon une des revendications 1 ou 2, **caractérisé en ce que** les masses (M) de ladite paire sont couplées mécaniquement entre elles et **en ce qu'**il présente un dit capteur (C) de position angulaire de référence unique associé à une des deux masses (M) de ladite paire.

**4.** Générateur selon une des revendications 1 ou 2, **caractérisé en ce que** les masses de ladite paire sont mécaniquement indépendantes et **en ce qu'**il présente un capteur (C) de position angulaire de référence pour chacune des deux masses (M) de ladite paire.

**5.** Générateur selon la revendication 1, **caractérisé en ce que** le circuit de calcul comporte un élément de calcul à partir des valeurs mémorisées de l'indicateur temporel de la première période temporelle qui sépare deux signaux de position successifs (SP), et de la deuxième période temporelle qui sépare le passage du signal de consigne Fc(t) par deux points caractéristiques successifs et **en ce que** le circuit de calcul (DSP) comporte un élément de calcul de la différence entre lesdites première et deuxième périodes temporelles.

**6.** Générateur selon la revendication 5, **caractérisée en ce que** ladite différence entre lesdites première et deuxième périodes temporelles est normée par rapport à la deuxième période temporelle.

**7.** Générateur selon une des revendications 1 ou 5, **caractérisé en ce que** le circuit de calcul (DSP) comporte un élément de calcul à partir des valeurs mémorisées de l'indicateur temporel dudit écart temporel qui est mesuré entre l'instant où le capteur de position angulaire de référence délivre le signal de position et l'instant où le signal de consigne passe par ledit point caractéristique.

**8.** Générateur selon une des revendications précédentes, **caractérisé en ce que** ledit écart temporel mesuré est normé par rapport à la deuxième période temporelle.

**9.** Générateur selon la revendication 1, **caractérisé en ce qu'**au moins un module présente au moins un capteur auxiliaire de position angulaire qui est décalé angulairement par rapport au capteur de référence.

**10.** Générateur selon la revendication 9, **caractérisé en ce que** le circuit de calcul comporte un élément de calcul à partir des valeurs mémorisées de l'indicateur temporel de la première période temporelle qui sépare deux signaux de position successifs, et de la deuxième période temporelle qui sépare le passage du signal de consigne par deux points caractéristiques successifs et **en ce qu'**il comporte un élément de calcul de la différence entre la première et la deuxième période temporelle ramenées à un même écart angulaire.

**11.** Générateur selon la revendication 10, **caractérisé en ce que** le circuit de calcul (DSP) comporte un élément de calcul à partir des valeurs mémorisées de l'indicateur temporel dudit écart temporel qui est mesuré à partir de la différence entre l'instant où un capteur de position angulaire délivre le signal de position et l'instant où le signal de consigne passe par ledit point caractéristique, en tenant compte pour le ou les capteurs de position angulaire auxiliaires de leur décalage angulaire par rapport au capteur de position angulaire de référence (C).

**12.** Générateur selon une des revendications 1 à 11, **caractérisé en ce que** l'indicateur temporel est un compteur qui est réinitialisé périodiquement, par exemple par remise à zéro chaque fois qu'il atteint son compte maximal.

**13.** Générateur selon la revendication 12, **caractérisé en ce qu'**il comporte un élément logique pour ajouter à la valeur mémorisée de l'indicateur temporel une valeur égale à la réinitialisation du compte du compteur pour le premier signal de position après chaque dite réinitialisation et pour le premier passage par ledit point caractéristique du signal de consigne après chaque dite réinitialisation.

**14.** Générateur selon une des revendications précédentes, **caractérisé en ce qu'**il présente deux paires de masses tournantes, et **en ce que** le signal de consigne Fc(t) présente une amplitude représentant le module d'une force sinusoïdale à produire par l'action conjuguée de deux paires de masses tournantes en ajustant une phase φ, l'une des paires de masses tournantes présentant une avance de phase φ par rapport au signal de consigne et l'autre paire de masses tournantes un retard de phase φ, par rapport au signal de consigne Fc(t), le circuit de calcul générant d'une part un premier signal de commande (PI vitesse) pour ajuster la fréquence de rotation des masses tournantes et d'autre part un deuxième signal de commande pour ajuster ladite phase φ.

**Patentansprüche**

1.  Dynamischer Unwuchterreger, umfassend mindestens ein Paar von in Bezug auf eine Ebene symmetrischen exzentrischen Drehmassen und deren Bewegung durch mindestens ein von einem Steuermodul erzeugtes Steuersignal (CS) in Abhängigkeit von einem Sollwertsignal Fc(t) mit einer gegebenen Frequenz gesteuert wird, **dadurch gekennzeichnet, dass** er, für mindestens eine der Massen (M), einen Referenzwinkelpositionssensor (C) enthält, der ein Positionssignal (SP) liefert, das den Durchgang der Drehmasse (M) durch eine Referenzwinkelposition darstellt, und eine Steuerschaltung, die eine Rechenschaltung (DSP) enthält, um die Periodizität der Drehung der Masse aus den vom Positionssensor (C) gelieferten aufeinanderfolgenden Positionssignalen (SP) zu berechnen und das Steuersignal (CS) in Abhängigkeit von der Differenz zwischen der gemessenen Periodizität und der Periodizität des Sollwertsignals Fc(t) zu erzeugen, und **dadurch gekennzeichnet, dass** er eine Zeitkennung aufweist, deren Wert um einen Taktgeber erhöht wird, und einen Speicher, um den Wert der Zeitkennung zu speichern, wenn der Referenzwinkelpositionssensor das Positionssignal (SP) ausgibt und wenn das Sollwertsignal Fc(t) einen charakteristischen Punkt durchläuft.

2.  Erreger nach Anspruch 1, **dadurch gekennzeichnet, dass** er eine Phasenmessschaltung zum Messen eines zeitlichen Abstands zwischen dem vom Positionssensor (C) gelieferten Signal und einem Referenzpunkt des Sollwertsignals Fc(t) enthält, und dass die Rechenschaltung (DSP) ein Korrekturmodul zum Erzeugen des Steuersignals auch in Abhängigkeit von der Differenz zwischen dem gemessenen zeitlichen Abstand und einem zeitlichen Sollwertabstand enthält.

3.  Erreger nach einem der Ansprüche 1 oder 2, **dadurch gekennzeichnet, dass** die Massen (M) des Paares mechanisch miteinander gekoppelt sind und dass er einen Referenzwinkelpositionssensor (C) aufweist, der einer der beiden Massen (M) des Paares zugeordnet ist.

4.  Erreger nach einem der Ansprüche 1 oder 2, **dadurch gekennzeichnet, dass** die Massen des Paares mechanisch unabhängig sind und dass er einen Referenzwinkelpositionssensor (C) für jede der beiden Massen (M) des Paares aufweist.

5.  Erreger nach Anspruch 1, **dadurch gekennzeichnet, dass** die Rechenschaltung ein Rechenelement auf der Basis der gespeicherten Werte der Zeitkennung der ersten Zeitspanne, die zwei aufeinanderfolgende Positionssignale (SP) trennt, und der zweiten Zeitspanne, die den Durchgang des Sollwertsignals Fc(t) durch zwei aufeinanderfolgende charakteristische Punkte trennt, enthält, und dass die Rechenschaltung (DSP) ein Element zum Berechnen der Differenz zwischen der ersten und zweiten Zeitspanne enthält.

6.  Erreger nach Anspruch 5, **dadurch gekennzeichnet, dass** die Differenz zwischen der ersten und der zweiten Zeitspanne in Bezug auf die zweite Zeitspanne normiert ist.

7.  Erreger nach einem der Ansprüche 1 oder 5, **dadurch gekennzeichnet, dass** die Rechenschaltung (DSP) ein Rechenelement auf der Basis der gespeicherten Werte der Zeitkennung des zeitlichen Abstands enthält, das zwischen dem Zeitpunkt, zu dem der Referenzwinkelpositionssensor das Positionssignal liefert, und dem Zeitpunkt, zu dem das Sollwertsignal den charakteristischen Punkt durchläuft, gemessen wird.

8.  Erreger nach einem der vorstehenden Ansprüche, **dadurch gekennzeichnet, dass** der gemessene zeitliche Abstand in Bezug auf die zweite Zeitspanne normiert ist.

9.  Erreger nach Anspruch 1, **dadurch gekennzeichnet, dass** mindestens ein Modul mindestens einen zusätzlichen Winkelpositionssensor aufweist, der gegenüber dem Referenzsensor winkelversetzt ist.

10. Erreger nach Anspruch 9, **dadurch gekennzeichnet, dass** die Rechenschaltung ein Rechenelement auf der Basis der gespeicherten Werte der Zeitkennung der ersten Zeitspanne enthält, die zwei aufeinanderfolgende Positionssignale trennt, und der zweiten Zeitspanne, die den Durchgang des Sollwertsignals durch zwei aufeinanderfolgende charakteristische Punkte trennt, und dass sie ein Element zum Berechnen der Differenz zwischen der ersten und der zweiten Zeitspanne umfasst, die auf den gleichen Winkelabstand zurückgebracht ist.

**11.** Erreger nach Anspruch 10, **dadurch gekennzeichnet, dass** die Rechenschaltung (DSP) ein Rechenelement auf der Basis der gespeicherten Werte der Zeitkennung des zeitlichen Abstands enthält, der aus der Differenz zwischen dem Zeitpunkt, zu dem ein Positionssensor das Positionssignal liefert, und dem Zeitpunkt, zu dem das Sollwertsignal den charakteristischen Punkt durchläuft, gemessen wird, wobei für den bzw. die Hilfswinkelpositionssensor(en) deren Winkelversatz in Bezug auf den Referenzwinkelpositionssensor (C) berücksichtigt wird.

**12.** Erreger nach einem der Ansprüche 1 bis 11, **dadurch gekennzeichnet, dass** die Zeitkennung ein Zähler ist, der periodisch zurückgesetzt wird, beispielsweise durch Zurücksetzen bei jedem Erreichen seiner maximalen Zählung.

**13.** Erreger nach Anspruch 12, **dadurch gekennzeichnet, dass** er ein Logikelement enthält, um dem gespeicherten Wert der Zeitkennung einen Wert hinzuzufügen, der dem Zurücksetzen der Zählerzahl für das erste Positionssignal nach jedem Zurücksetzen und für den ersten Durchgang durch den charakteristischen Punkt des Sollwertsignals nach jedem Zurücksetzen entspricht.

**14.** Erreger nach einem der vorstehenden Ansprüche, **dadurch gekennzeichnet, dass** er zwei Paare von Drehmassen aufweist, und dass das Sollwertsignal Fc(t) eine Amplitude aufweist, die das Modul einer sinusförmigen Kraft darstellt, die durch das Zusammenwirken von zwei Paaren von Drehmassen durch Einstellen einer Phase φ erzeugt wird, wobei eines der Paare von Drehmassen einen Vorschub der Phase φ in Bezug auf das Sollwertsignal und das andere Paar von Drehmassen eine Verzögerung der Phase φ in Bezug auf das Sollwertsignal Fc(t) aufweist, wobei die Rechenschaltung einerseits ein erstes Steuersignal (PI-Geschwindigkeit) zum Einstellen der Drehfrequenz der Drehmassen und andererseits ein zweites Steuersignal zum Einstellen dieser Phase φ erzeugt.

**Claims**

**1.** Unbalance dynamic load generator comprising at least one pair of eccentric rotating masses which are symmetric with respect to a plane and whose motion is controlled by at least one control signal (CS) generated by a control module as a function of a preset signal $F_c(t)$ having a given frequency, **characterized in that**, for at least one of the masses (M), it comprises a reference angular position sensor (C) delivering a position signal (SP) representing the passing of the said rotating mass (M) through a reference angular position and a control circuit comprising a calculation circuit (DSP) for calculating the periodicity of the rotation of the said mass from the successive position signals (SP) delivered by the position sensor (C) and for generating the said control signal (CS) as a function of the difference between the measured periodicity and the periodicity of the preset signal $F_c(t)$ and **in that** it exhibits a time indicator whose value is incremented by a clock and a memory for storing the value of the time indicator when the reference angular position sensor delivers the said position signal (SP) and when the preset signal Fc(t) passes through a characteristic point.

**2.** Generator according to Claim 1, **characterized in that** it comprises a phase measurement circuit for measuring a time gap between the signal delivered by the position sensor (C) and a reference point of the preset signal Fc(t) and **in that** the said calculation circuit (DSP) comprises a corrector module for generating the said control signal also as a function of the difference between the said measured time gap and a preset time gap.

**3.** Generator according to either of Claims 1 and 2, **characterized in that** the masses (M) of the said pair are mechanically coupled together and **in that** it exhibits a single so-called reference angular position sensor (C) associated with one of the two masses (M) of the said pair.

**4.** Generator according to either of Claims 1 or 2, **characterized in that** the masses of the said pair are mechanically independent and **in that** it exhibits a reference angular position sensor (C) for each of the two masses (M) of the said pair.

**5.** Generator according to Claim 1, **characterized in that** the calculation circuit comprises an element for calculating from the stored values of the time indicator the first time period which separates two successive position signals (SP) and the second time period which separates the passing of the preset signal Fc(t) through two successive characteristic points and **in that** the calculation circuit (DSP) comprises an element for calculating the difference between the said first and second time periods.

**6.** Generator according to Claim 5, **characterized in that** the said difference between the said first and second time periods is normed with respect to the second time period.

7.  Generator according to either of Claims 1 or 5, **characterized in that** the calculation circuit (DSP) comprises an element for calculating from the stored values of the time indicator the said time gap which is measured between the instant at which the reference angular position sensor delivers the position signal and the instant at which the preset signal passes through the said characteristic point.

8.  Generator according to any one of the preceding claims, **characterized in that** the said measured time gap is normed with respect to the second time period.

9.  Generator according to Claim 1, **characterized in that** at least one module exhibits at least one auxiliary angular position sensor which is angularly offset with respect to the reference sensor.

10. Generator according to Claim 9, **characterized in that** the calculation circuit comprises an element for calculating from the stored values of the time indicator the first time period which separates two successive position signals and the second time period which separates the passing of the preset signal through two successive characteristic points and **in that** it comprises an element for calculating the difference between the first and the second time period referred to one and the same angular gap.

11. Generator according to Claim 10, **characterized in that** the calculation circuit (DSP) comprises an element for calculating from the stored values of the time indicator the said time gap which is measured from the difference between the instant at which an angular position sensor delivers the position sensor or signal and the instant at which the preset signal passes through the said characteristic point, by taking account in respect of the auxiliary angular position sensor or sensors of their angular offset with respect to the reference angular position sensor (C).

12. Generator according to one of Claims 1 to 11, **characterized in that** the time indicator is a counter which is reinitialized periodically, for example by resetting to zero each time it reaches its maximum count.

13. Generator according to Claim 12, **characterized in that** it comprises a logic element for adding to the stored value of the time indicator a value equal to the reinitialization of the count of the counter in respect of the first position signal after each so-called reinitialization and in respect of the first passing through the said characteristic point of the preset signal after each so-called reinitialization.

14. Generator according to one of the preceding claims, **characterized in that** it exhibits two pairs of rotating masses, and **in that** the preset signal Fc(t) exhibits an amplitude representing the modulus of a sinusoidal force to be produced by the conjugate action of two pairs of rotating masses by adjusting a phase $\varphi$, one of the pairs of rotating masses exhibiting a lead in phase $\varphi$ with respect to the preset signal and the other pair of rotating masses a lag in phase $\varphi$, with respect to the preset signal Fc(t), the calculation circuit generating on the one hand a first control signal (PI speed) for adjusting the frequency of rotation of the rotating masses and on the other hand a second control signal for adjusting the said phase $\varphi$.

FIG.1

FIG.2

SP1     SP2     SP3 SP4

| Top S | Top N° 1 | Top N° 2 | Top N° 3 | Top N° 4 |
|-------|----------|----------|----------|----------|

MOD1    MOD2    MOD3 MOD4

| Capture S | Capture 1 | Capture 2 | Capture 3 | Capture 4 |
|-----------|-----------|-----------|-----------|-----------|

| Calcul Phase | ErreurPhase1= (Capture1– CaptureS)/ PériodeS | ErreurPhase2= (Capture 2– CaptureS)/ PériodeS | ErreurPhase3= Capture 3– CaptureS)/ Période S | ErreurPhase4= (Capture4– CaptureS)/ PériodeS |
|--------------|---|---|---|---|

Phi1     Phi2     Phi3     Phi4

+   +   +   +   +

| Correction Phase 1 | Correction Phase 2 | Correction Phase 3 | Correction Phase 4 |
|---|---|---|---|

| PI Phase 1 | PI Phase 2 | PI Phase 3 | PI Phase 4 |
|---|---|---|---|

| Calcul Période S | Calcul Période 1 | Calcul Période 2 | Calcul Période 3 | Calcul Période 4 |
|---|---|---|---|---|

| Erreur vitesse 1 =(Période 1/ Période S)-1 | Erreur vitesse 2 =(Période 2/ PériodeS)-1 | Erreur vitesse 3 =(Période 3/ PériodeS)-1 | Erreur vitesse 4 =(Période4/ Période S)-1 |
|---|---|---|---|

DSP

+   +   +   +

| PI Vitesse 1 | PI Vitesse 2 | PI Vitesse 3 | PI Vitesse 4 |
|---|---|---|---|

CS1    CS2    CS3    CS4

| PWR1 | PWR2 | PWR3 | PWR4 |
|------|------|------|------|

W1    W2    W3    W4

| MT1 Sens horaire | MT2 Sens anti-horaire | MT3 Sens horaire | MT4 Sens anti-horaire |
|---|---|---|---|

**FIG.3**

```
        ┌──────────────┐
        │    Signal    │
        │   consigne   │
        └──────┬───────┘
               │
               ▼
        ┌──────────────────┐
        │ Mesure normée à 1 │
        │ d'amplitude=a (≤ 1)│
        └────────┬─────────┘
                 │ a
                 ▼
        ┌──────────────┐
        │  c=abs(a)    │
        └──────┬───────┘
               │
               ▼
        ┌──────────────┐
        │     PBF      │
        └──────┬───────┘
               │ c'
               ▼
        ┌──────────────┐
        │   x π / 2    │
        └──────┬───────┘
               │ c''
```

$\varphi_1 = \text{Arc Cos}(c'')$
$\varphi_2 = \varphi_1$

$\varphi_3 = -\text{Arc Cos}(c'')$
$\varphi_4 = \varphi_3$

$\varphi_1$      $\varphi_2$      $\varphi_3$      $\varphi_4$

x0,5/π     x0,5/π     x0,5/π     x0,5/π

# FIG.4a

| Période S =<br>CaptureS –<br>CaptureSp | Période 1 =<br>Capture1 –<br>Capture1p | Période 2 =<br>Capture2 –<br>Capture2p | Période 3 =<br>Capture3 –<br>Capture3p | Période 4 =<br>Capture4 –<br>Capture4p |
|---|---|---|---|---|
| Si CaptureSp><br>CaptureS alors<br>Période S=Période S+<br>Lcompteur | Si Capture1p><br>Capture1 alors<br>Période1=Période 1+<br>Lcompteur | Si Capture2p><br>Capture2 alors<br>Période2=Période2+<br>Lcompteur | Si Capture3p><br>Capture3 alors<br>Période3=Période3+<br>Lcompteur | Si Capture4p><br>Capture4 alors<br>Période 4=Période4+<br>Lcompteur |
| CaptureSp=<br>CaptureS | Capture1p=<br>Capture1 | Capture2p=<br>Capture2 | Capture3p=<br>Capture3 | Capture4p=<br>Capture4 |

FIG.4b

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2169672
- EP 337040 A
- US 5903077 A
- DE 4407013
- EP 0840191 A
- EP 377040 A